# EUROPÄISCHE PATENTSCHRIFT

(11) **EP 1 966 678 B1**
(45) Veröffentlichungstag und Bekanntmachung des Hinweises auf die Patenterteilung: **17.04.2019**
(21) Anmeldenummer: 06819578.3
(22) Anmeldetag: 17.11.2006
(51) Int. Cl.: G06F 3/0482

(54) **BEDIENVORRICHTUNG FÜR EIN ELEKTRONISCHES GERÄT, INSBESONDERE EINE FAHRERINFORMATIONSVORRICHTUNG**
CONTROL UNIT FOR AN ELECTRONIC DEVICE, ESPECIALLY A DRIVER INFORMATION DEVICE
DISPOSITIF DE COMMANDE POUR APPAREIL ELECTRONIQUE, EN PARTICULIER DISPOSITIF D'INFORMATION AU CONDUCTEUR

(30) Priorität: 21.12.2005 DE 102005061144
(43) Veröffentlichungstag der Anmeldung: 10.09.2008
(73) Patentinhaber: ROBERT BOSCH GMBH, 70442 Stuttgart (DE)
(72) Erfinder: GILLIARD, Bertrand, 1110 Morges (CH); GIORDANI, Marc, 1123 Aclens (CH); SCHWEIZER, Philippe, 1110 Morges (CH)
(86) Internationale Anmeldenummer: PCT/EP2006/068604
(87) Internationale Veröffentlichungsnummer: WO 2007/073987

(56) Entgegenhaltungen:
- EP-A- 0 841 609
- EP-A- 1 369 770
- EP-A1- 1 369 770
- EP-A2- 0 841 609
- WO-A1-03/036455
- US-A- 5 801 703
- US-A- 5 801 703
- US-A- 5 986 657
- US-A- 5 986 657
- US-B1- 6 175 782

## Beschreibung

### Stand der Technik

Die Erfindung geht aus von einer Bedienvorrichtung für ein elektronisches Gerät, insbesondere eine Fahrerinformationsvorrichtung, nach der Gattung des Hauptanspruchs. Es sind bereits Fahrerinformationsvorrichtungen bekannt, bei denen verschiedene Funktionen der Fahrerinformationsvorrichtung in verschiedenen Bildschirmen auswählbar sind. Hierzu ist zunächst der entsprechende Bildschirm aufzurufen, wobei dann z.B. aus einer Liste die gewünschte Funktion gewählt wird.

Aus der EP 737 006 A2 ist es bekannt, dass ein Benutzer sich ein eigenes Bedienmenü mit Unterfunktionen in einer Anzeige zusammenstellen kann. Hierzu wählt er die von ihm gewünschte Funktion aus einer Liste aus, so dass ein Auswahlfenster der Funktion erzeugt und in dem Menü mit auswählbaren Optionen dargestellt wird.

Aus der US 5,801,703 A ist eine Vorrichtung und ein Verfahren zur Auswahl von erweiterbaren Menüs bekannt, bei dem neben einer Menü-Überschrift eine Erweiterungsmarke dargestellt ist, durch deren Anwahl ein Menü derart erweitert werden kann, dass Unterfunktionen des Menüs dargestellt werden. Mit einer Verkleinerungsmarke kann der ursprüngliche Zustand des Menüs wieder hergestellt werden.

Aus der US 5,986,657 ist eine Benutzeroberfläche für ein CAD-Programm bekannt, bei dem ebenfalls zwischen einem erweiterten Zustand und einem eingeschränkten Zustand eines Bedienmenüs umgeschaltet werden kann.

Aus der WO 03/036455 A1 ist eine drehbare, multifunktionale Schaltereinheit zur Verwendung in einem Fahrzeug bekannt, die zur Steuerung eines Bedienmenüs, das verschiedene Felder aufweist, ausgelegt ist.

Aus der EP 0701926 A2 ist eine Multifunktionsbedieneinrichtung bekannt, bei der eine Anwahl individueller Funktion innerhalb einer Funktionsgruppe mittels eines einzigen ersten Bedienelements erfolgt, das eine Enter-Funktion aufweist.

Aus der WO 98/09847 A1 ist eine grafische Benutzerschnittstelle in einem Lenkrad eines Fahrzeugs bekannt, die mit einer Displayeinheit zusammenwirkt.

### Vorteile der Erfindung

Die erfindungsgemäße Bedienvorrichtung mit den Merkmalen der nebengeordneten Ansprüche hat demgegenüber den Vorteil, dass ein Benutzer ein Auswahlmenü, in dem eine Funktion angegeben ist, erweitern kann. Je nach der Auswahl des Benutzers nimmt daher das jeweilige Auswahlfenster weniger Platz ein, wenn der Benutzer eine Einstellung zurzeit nicht benötigt, oder mehr Platz ein, wenn der Benutzer eine Einstellung vornehmen möchte. Damit wird es ermöglicht, einerseits zugleich eine Vielzahl möglicher, auswählbarer Funktion dem Benutzer in einer Anzeige anzubieten und ihm andererseits mit der möglichen Vergrößerung des Auswahlfensters die Möglichkeit zu geben, eine große Anzahl von Unterfunktionen anzubieten, wenn ein Benutzer diese Auswahl wünscht und sie daher anwählt. Damit wird insbesondere die Bedienung in einem Fahrzeug erleichtert, da in einem Fahrzeug im allgemeinen nur relativ kleine Anzeigeflächen vorhanden sind, andererseits jedoch eine Vielzahl von Systemen im Fahrzeug durch eine Fahrerinformationsvorrichtung gesteuert werden kann. Durch eine Vergrößerung eines Auswahlfensters auf Wunsch eines Benutzers kann damit eine hohe Flexibilität bei der Auswahl von Funktionen mit einer übersichtlichen Anzeige der Funktionen selbst verbunden werden.

Durch die in den Unteransprüchen aufgeführten Maßnahmen sind vorteilhafte Weiterbildungen und Verbesserungen der im Hauptanspruch angegebenen Bedienvorrichtung für eine Fahrerinformationsvorrichtung möglich. Besonders vorteilhaft ist es, bei der Erweiterung des Auswahlfensters eine Position des oberen Randes des Auswahlfensters unverändert zu lassen. Hierdurch wird eine Irritation des Benutzers vermieden, indem das von ihm angewählte Auswahlfenster möglichst nicht verschoben, sondern lediglich in eine Richtung erweitert wird. Insbesondere ist es hierbei vorteilhaft, in der Anzeigefläche nachfolgende Auswahlfenster nach unten zu verschieben.

Weiterhin ist es vorteilhaft, in einem angezeigten Auswahlfenster unabhängig davon, ob eine Vergrößerung des Auswahlfensters erfolgt ist oder nicht, einen Status der jeweiligen Funktion anzuzeigen, auf die das Auswahlfenster bezogen ist. Selbst wenn das Auswahlfenster nicht vergrößert ist, kann sich ein Benutzer durch einen schnellen Blick auf die Anzeigefläche über den Status der jeweiligen Funktion informieren.

Insbesondere ist es vorteilhaft, mit der Erweiterung des Auswahlfensters eine RollbalkenAuswahl, eine Tastenfeld-Eingabe und/oder Schaltflächen zur Steuerung der neu hinzugekommenen Unterfunktion darzustellen. Hierdurch ist es möglich, auch komplexere Eingaben auf bequeme Weise vornehmen zu können.

Es ist weiterhin vorteilhaft, eine Schaltfläche zur Vergrößerung oder zur Verkleinerung eines Auswahlfensters vorzusehen. Hiermit hat ein Benutzer die Möglichkeit, ein von ihm gewünschtes Auswahlfenster zu vergrößern oder zu verkleinern. Ein Benutzer kann damit gezielt Einfluss auf die Darstellung in der Anzeige der Fahrerinformationsvorrichtung nehmen. Ferner ist es vorteilhaft, wenn nach einer vorgegebenen Zeit, beispielsweise einer Minute, in der keine Eingabe erfolgt ist, ein jeweiliges Auswahlfenster automatisch verkleinert wird, da in diesem Fall eine manuelle Eingabe einer Verkleinerung entfallen kann.

Weiterhin ist es vorteilhaft, ein Auswahlfenster derart zu gestalten, dass in dem Bereich des erweiterten Auswahlfensters gegebenenfalls neben Einstellvorrichtungen auch weitere Auswahlfenster dargestellt werden, die für sich wiederum erweitert werden können. Wird ein solches, untergeordnetes Auswahlfenster erweitert, so wird in einer bevorzugten Ausführungsform auch dasjenige Auswahlfenster mit vergrößert, in dem das untergeordnete Auswahlfenster vorgesehen ist. Damit kann eine Anpassung auch bei einer Vielzahl von untergeordneten Auswahlfenstern in der Anzeige erfolgen.

Vorteilhaft ist es ferner, die Fläche einer Anzeige berührungsempfindlich auszugestalten, um eine Eingabe unmittelbar in der Anzeigefläche vornehmen zu können und somit nicht nur die Anzeigeoberfläche, sondern korrespondierend hierzu das Aussehen der Steuerungsfläche jeweils an die Benutzerauswahl angepasst werden kann.

### Zeichnung

Ausführungsbeispiele der Erfindung sind in der Zeichnung dargestellt und in der nachfolgenden Beschreibung näher erläutert. Es zeigen
Figur 1 eine Fahrerinformationsvorrichtung mit einer erfindungsgemäßen B edienvorrichtung,
Figuren 2 bis 5 verschiedene Darstellungen in einer Anzeige einer erfindungsgemäßen Bedienvorrichtung.

### Beschreibung des Ausführungsbeispiels

Die erfindungsgemäße Bedienvorrichtung kann für beliebige elektronische Geräte verwendet werden. Insbesondere ist ihre Verwendung dann vorteilhaft, wenn nur eine recht kleine Bildschirmfläche zur Verfügung steht. Im Folgenden wird die Funktion daher am Beispiel einer Fahrerinformationsvorrichtung in einem Kraftfahrzeug erläutert.

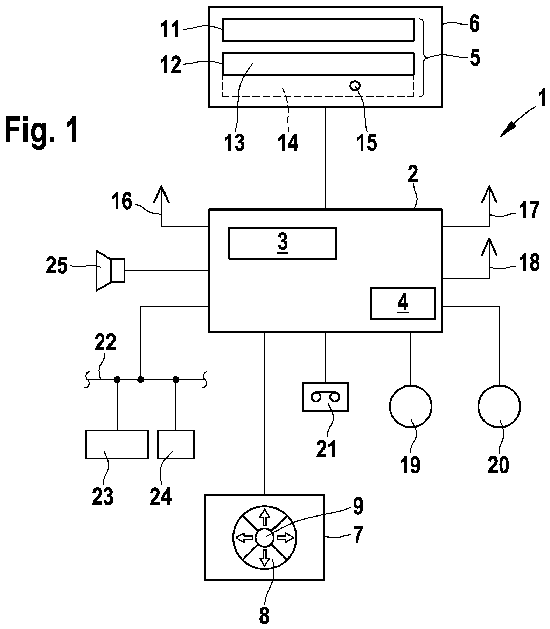

In der Figur 1 ist eine Fahrerinformationsvorrichtung 1 gezeigt, die in ein Kraftfahrzeug eingebracht oder dort eingebaut ist. Die Fahrerinformationsvorrichtung 1 weist eine Zentraleinheit 2 mit einer Recheneinheit 3 zur Steuerung der Fahrerinformationsvorrichtung 1 und der an sie angeschlossenen Systeme auf. Die Zentraleinheit 2 weist ferner einen Speicher 4 auf, in dem Betriebsdaten für den Betrieb der Fahrerinformationsvorrichtung 1 abgelegt sind. Insbesondere sind in dem bevorzugt nichtflüchtig ausgeführten Speicher Daten für ein Erzeugen einer Menüdarstellung 5 abgelegt, die in einer Anzeigeeinheit 6 angezeigt wird. Die Anzeigeeinheit 6 ist mit der Zentraleinheit 2 verbunden und zeigt auswählbare Funktionen und Unterfunktionen der Fahrerinformationsvorrichtung 1 an. Die Fahrerinformationsvorrichtung 1 kann dabei durch den Benutzer mit beliebigen Steuermitteln gesteuert werden, so z.B. durch eine Sprachbedienung, über eine als Touch-Screen ausgeführte Anzeigeeinheit 6 oder über ein Bedienelement 7, das insbesondere Tasten 8 zur Steuerung einer Markierung in einer Fläche der Anzeigeeinheit 6 aufweist. Ferner ist bevorzugt ein Auswahlelements 9 zur Bestätigung einer getätigten Auswahl vorgesehen. In der Menüdarstellung 5 ist ein erstes Auswahlfenster 11 und ein zweites Auswahlfenster 12 gezeigt. Das erste Auswahlfenster 11 ist nicht erweitert. Das zweite Auswahlfenster 12 besteht jedoch aus einem ersten Bereich 13 und einem zweiten Bereich 14. Nach einer zuvor bereits vorgenommenen, entsprechenden Auswahl wurde der ersten Bereich 13 um den zweiten Bereich 14 und damit um mindestens eine auswählbare Unterfunktion erweitert. Hierbei ist ein kreisförmiges Auswahlfeld 15 zur Auswahl der Unterfunktion dargestellt.

Die Fahrerinformationsvorrichtung 1 kann der Steuerung einer beliebigen Vielzahl von Funktionen von Komponenten des Fahrzeugs dienen. Dies können z.B. eine Radioeinrichtung, ein CD-Spieler, ein CD-Wechsler, ein Kassettenabspielgerät, eine Klangeinstellung, eine Navigationsvorrichtung, eine Telefonvorrichtung, eine Klimaregelungseinheit und/oder eine Personalisierungseinstellung der Fahrerinformationseinrichtung sein. Hierbei können alle diese Funktionen, andere Funktionen, aber auch nur ein Teil dieser Funktionen jeweils in der Anzeige einem Benutzer angeboten werden. Im Folgenden ist beispielhaft die Fahrerinformationsvorrichtung 1 anhand des Ausführungsbeispiels gemäß der Figur 1 dargestellt.

Die Zentraleinheit 2 ist mit einer ersten Ortungseinheit 16 verbunden, die Funksignale von sogenannten GPS-(Global Positioning System) Satelliten empfängt. Mittels der empfangenen Signale ist eine Positionsbestimmung des Fahrzeugs möglich. Eine Antenne 17 ist zur Ausbildung einer Mobiltelefonverbindung zu einem Mobilfunknetz vorgesehen. Hierdurch können einerseits Verkehrsinformationen abgerufen werden. Andererseits ist es auch möglich, dass der Benutzer eine Telefonverbindung über die Antenne 17 herstellt. Eine weitere Antenne 18 ist für den Empfang eines Radioprogramms vorgesehen. Mit der Zentraleinheit 2 ist ferner eine erste Speichereinheit 19 mit einer Navigationskartenbasis für eine Routeberechnung z.B. durch die Recheneinheit 3 angeschlossen. Ferner ist eine zweite Speichereinheit 20 vorgesehen, in der Musiktitel gespeichert werden können. Dies kann ein CD-Wechsler, ein CD-Laufwerk oder eine Datenträgerlaufwerk, z.B. eine eingeschobene Flash-Speicherkarte sein. Ferner kann auch ein Kassettengerät 21 mit der Zentraleinheit 2 verbunden werden. Von den angeschlossenen Speichereinheiten 19, 20, 21 werden Daten zur weiteren Verarbeitung an die Recheneinheit 3 übertragen. Ferner werden aber auch Steuerungssignale insbesondere über einen Datenbus 22 an andere Fahrzeugsysteme übertragen. So ist es z.B. möglich, eine Klimasteuerung 23 mittels der Zentraleinheit 2 und einer entsprechenden Auswahl in einem erweiterten Auswahlfenster in der Anzeigeeinheit 6 zu ermöglichen, wobei eine Ansteuerung der Klimaregelung und damit eine Veränderung der Temperatur im Innenraum des Fahrzeugs vorgenommen wird. In einer weiteren Ausführungsform kann auch z.B. auf einen Spritverbrauch und einen Kilometerzähler 24 zugegriffen werden. Hierdurch ist es möglich, dass die Recheneinheit 3 als ein sogenannter Bordcomputer arbeitet und den durchschnittlichen Verbrauch und/oder eine durchschnittliche Fahrzeuggeschwindigkeit an den Fahrer über die Anzeigeeinheit 6 ausgibt. Ebenso wird die Anzeigeeinheit 6 dazu benutzt, Fahrtroutenempfehlungen darzustellen. Weiterhin ist an die Zentraleinheit 2 ein Lautsprecher 25 angeschlossen, der einerseits ein Musikprogramm und eingehende Telefonate ausgibt, aber andererseits auch Warnsignale ausgeben kann, wenn aufgrund einer Fahrzeugnavigation eine Wegänderung vorzunehmen ist oder eine Störung im Fahrzeug aufgetreten ist.

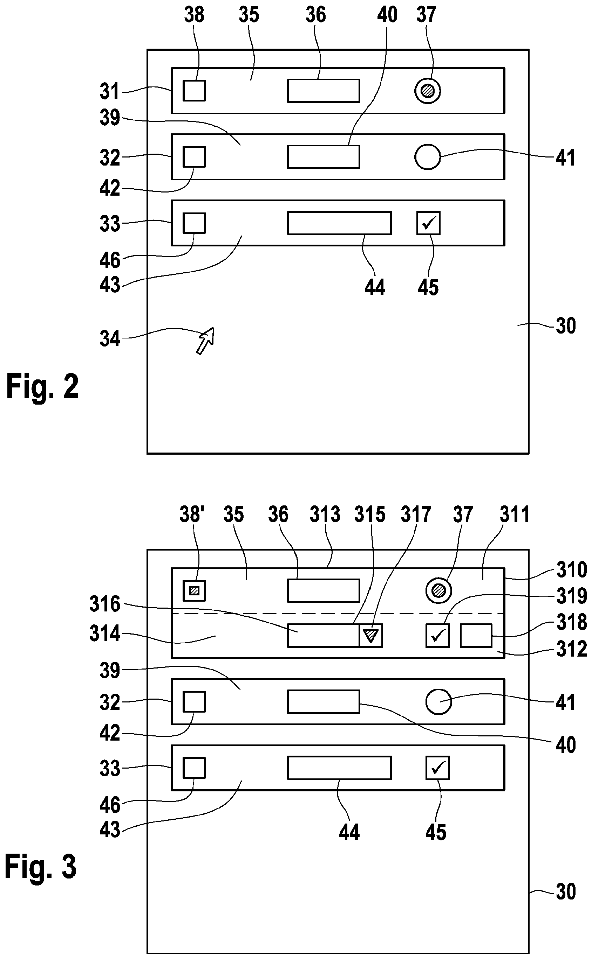

In der Figur 2 ist ein erstes Ausführungsbeispiel für eine Anzeigefläche 30 dargestellt. In der Anzeigefläche 30 ist ein erstes Auswahlfenster 31 mit einer Radiofunktion, ein zweites Auswahlfenster 32 mit einer CD-Funktion und ein drittes Auswahlfenster 33 mit einer Navigationsfunktion dargestellt. In dem hier dargestellten Ausführungsbeispiel ist ferner eine Anzeigemarke 34 vorgesehen, die z.B. mittels des Bedienelements 7 frei in der Anzeigefläche 30 bewegt werden kann. Entsprechend können einzelne Schaltflächen der Anzeigefläche 30 durch eine Betätigung des Auswahlelements 9 angewählt werden. In einer weiteren Ausführungsform ist es auch möglich, dass mittels Cursortasten 8 zwischen verschiedenen, einzelnen Anwählflächen unmittelbar gewechselt werden kann und eine Auswahl anschließend durch ein Bestätigungselement erfolgt.

In dem ersten Auswahlfenster 31 ist eine Bezeichnung 35 "Radio" dargestellt. Damit wird angegeben, dass sich das erste Auswahlfenster 31 auf die Radio-Funktionalität bezieht. Gegebenenfalls kann je nach Ausführungsform auch nur das Auswahlfenster 31 als ein einziges Auswahlfeld in der Anzeige dargestellt sein. In einem Textfeld 36 ist ein aktuell eingestellter Radiosender dargestellt. Der Benutzer kann also erkennen, ohne das Auswahlfenster vergrößern zu müssen, welcher Radiosender derzeit eingestellt ist. Weiterhin ist eine Aktivierungsmarke 37 dargestellt. Die Aktivierungsmarke 37 ist gefüllt dargestellt und zeigt an, dass derzeit das Radio aktiviert ist und eine Ausgabe des Programms des empfangenen Radiosenders erfolgt, der in dem Textfeld 36 angegeben ist. Ferner ist eine Vergrößerungsmarke 38 vorgesehen. Durch eine Anwahl der Erweiterungsmarke wird das Auswahlfenster 31 vergrößert. Eine entsprechende Vergrößerung wird im Anschluss anhand der Figur 3 erläutert.

In dem zweiten Auswahlfenster 32 ist eine CD-Funktionalität gezeigt. Hierzu ist eine Bezeichnung 39 "CD" angegeben, anhand der ein Benutzer erkennen kann, dass hiermit ein CD-Wechsler bzw. ein CD-Laufwerk zur Audiowiedergabe im Fahrzeug gesteuert wird. In einem Textfenster 40 ist ein aktuell gespielter oder zu spielender Liedtitel bzw. eine Titel-Nummer von Einzeltiteln des in dem Laufwerk eingelegten Datenträgers angegeben. Ferner ist auch eine Aktivierungsmarke 41 vorgesehen. Im Unterschied zu der Aktivierungsmarke 37 in dem ersten Auswahlfenster 31 ist die Aktivierungsmarke 41 in dem zweiten Auswahlfenster leer. Ein Benutzer kann durch ein Anwählen der Aktivierungsmarke 41 eine Audioausgabe von einem Radioempfang auf eine Wiedergabe der CD umschalten. Durch ein gegebenenfalls anschließendes Auswählen der Aktivierungsmarke 37 kann in den Radiobetrieb zurückgeschaltet werden. Ebenso wie in dem ersten Auswahlfenster 31 ist auch in dem zweiten Auswahlfenster 32 eine Vergrößerungsmarke 42 zum Vergrößern des zweiten Auswahlfensters 32 vorgesehen.

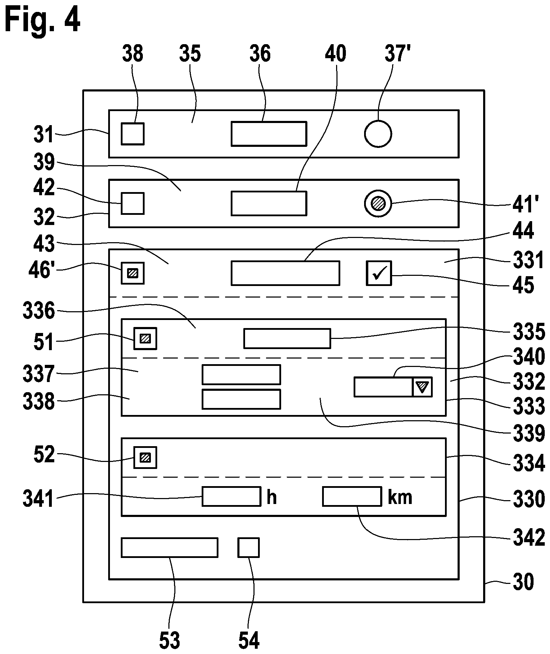

In dem dritten Auswahlfenster 33 ist eine Bezeichnung 43 "Navi" als Abkürzung für "Navigation" vorgegeben, die angibt, dass das dritte Auswahlfenster 33 der Navigation eines Fahrzeugs dient. In einem Textfeld 44 ist ein aktuell eingestelltes Fahrziel eingestellt. Ferner ist in dem dritten Auswahlfenster eine Aktivierungsmarkierung 45 vorgesehen, die angibt, dass eine Zielführung zu dem in dem Textfeld 44 angegebenen Fahrziel derzeit aktiviert ist. Auch ohne eine Vergrößerung des dritten Auswahlfensters kann die Navigation durch ein Anklicken der Aktivierungsmarkierung 45 deaktiviert bzw. auch wieder aktiviert werden. Weiterhin ist eine Vergrößerungsmarke 46 vorgesehen, mit der das dritte Auswahlfenster 33 vergrößert werden kann. Eine Vergrößerung des dritten Auswahlfensters 33 wird im Nachfolgenden anhand der Figur 4 erläutert.

In der Figur 3 ist ebenfalls die Anzeigefläche 30 dargestellt, wobei das erste Auswahlfenster 31 gemäß der Figur 2 nun als ein erweitertes, erstes Auswahlfenster 310 dargestellt ist. Das erweiterte, erste Auswahlfenster 310 unterscheidet sich von dem bisherigen, ersten Auswahlfenster 31 dadurch, dass sich sein Flächenanteil an der Anzeigefläche 30 dem gegenüber vergrößert hat. Ein erster Bereich 311 entspricht dem bisherigen, ersten Auswahlfenster 31. Zusätzlich wird nun ein zweiter Bereiche 312 angezeigt. Ein oberer Rand 313 des ersten Auswahlfensters 310 wird an der gleichen Position angezeigt wie ein oberer Rand des bisherigen, ersten Auswahlfensters 31. Infolge der Vergrößerung des ersten Auswahlfensters verschieben sich das zweite Auswahlfenster 32 und das dritte Auswahlfenster 33 in der Anzeigefläche 30 nach unten.

In dem ersten Bereich 311 hat sich die Vergrößerungsmarke 38, nun als 38' bezeichnet, geändert. Um eine Vergrößerung anzuzeigen, ist die Vergrößerungsmarke 38' nun teilweise gefüllt. Stattdessen sind auch beliebige andere Symbole zur Anzeige einer erfolgten Vergrößerung eines jeweiligen Auswahlfensters möglich.

In dem zweiten Bereich 312 werden nun Unterfunktionen zur allgemeinen RadioFunktion angegeben. Mit einer Bezeichnung 314 "Station" wird eine nachfolgende Senderauswahl bezeichnet. Hierzu ist eine Listenauswahl 315 angegeben. In einem Auswahlfenster 316 können verschiedene Sendernamen, die von dem Radio gerade empfangen werden können, angezeigt werden. Durch eine Auswahl auf den Wechselpfeil 317 können diese einzelnen Sendernamen durchlaufen und zur Auswahl angezeigt werden. In einer weiteren Ausführungsform kann auch durch ein Anklicken des Pfeils 317 das Auswahlfenster 316 zu einer Listendarstellung vergrößert werden, so dass ein Benutzer aus einer Vielzahl von Sendern gleichzeitig auswählen kann. Eine weitere Radiofunktionalität 318, z.B. ein Lauterschalten von Verkehrsnachrichten, kann durch das Setzen eines Hakens 319 ausgewählt werden. Daneben sind beliebige andere Darstellungen von Funktionen des Radioempfangs möglich, so z.B. eine Programmtypauswahl, eine Bevorzugung starker Radiosender, eine Auswahl aus gespeicherten Radiostationen oder eine Eingabe einer konkreten Empfangsfrequenz.

Hat der Benutzer die Eingaben vorgenommen, hat er z.B. eine neue Radiostation über die Listenauswahl 315 gewählt und die Auswahl bestätigt, so ändert sich der eingestellte und wiedergegebene Radiosender. Entsprechend wird auch die Darstellung in dem Textfeld 36 an den nunmehr neu eingestellten Sender angepasst. Der Benutzer kann nun durch eine erneute Auswahl der Vergrößerungsmarke 38' das erste Auswahlfenster 310 wieder verkleinern, so dass wieder das erste Auswahlfenster 31 dargestellt wird. In einer weiteren Ausführungsform ist es auch möglich, dass das erste Auswahlfenster 310 nach einer vorgegebenen Zeit, z.B. nach zwei Minuten, falls keine Eingabe erfolgt ist, automatisch wieder unter Ausblendung des zweiten Bereichs 312 verkleinert angezeigt wird.

Der erste Bereich 311 bleibt in einer ersten Ausführungsform inhaltlich stets unverändert, wobei natürlich entsprechend die jeweils gewählten Einstellungen ausgegeben werden. In einer weiteren Ausführungsform ist es jedoch auch möglich, dass je nach einer Auswahl der Unterfunktion, entsprechend auch ein Status der Unterfunktion nur dann dargestellt wird, wenn die Unterfunktion aktiviert wird. So ist es z.B. möglich, dass eine Aktivierung einer Hervorhebung von Verkehrsfunkmeldungen in dem ersten Bereich 311 bzw. dem ersten Auswahlfenster 31 dargestellt wird. Ist eine Hervorhebung von Verkehrsfunkmeldungen deaktiviert, so erfolgt in dem ersten Bereich 311 bzw. in dem ersten Auswahlfenster 31 ohne eine Vergrößerung keine Hervorhebung. In einer weiteren Ausführungsform kann auch der Informationsgehalt und/oder die Darstellungsform des ersten Bereichs des Auswahlfensters mit der Verkleinerung bzw. der Vergrößerung geändert werden.

Entsprechende Verfahren zur Auswahl wurden im obigen Beispiel anhand der Radiofunktion erläutert, sind aber entsprechend auf andere Funktionen des Fahrzeugs in gleicher Weise übertragbar.

In der Figur 4 ist ein vergrößertes, drittes Auswahlfenster 330 dargestellt. Das vergrößerte Auswahlfenster 330 weist ebenfalls einen ersten Bereich 331 und einen zweiten Bereich 332 auf, wobei das ursprüngliche, unvergrößerte dritte Auswahlfenster 33 dem ersten Bereich 331 entspricht. Entsprechend ist die Vergrößerungsmarke 46' nun geändert dargestellt. In dem zweiten Bereich sind ein erstes Unterauswahlfenster 333 und ein zweites Unterauswahlfenster 334 dargestellt. Beide Unterauswahlfenster 333, 334 sind ebenfalls bereits in ihrer erweiterten Form dargestellt. Dies wird mit den entsprechend angepassten Vergrößerungsmarken 51, 52 der jeweiligen Unterauswahlfenster 333, 334 angegeben. Neben den Unterauswahlfenstern 333, 334 ist eine weitere Einstellmöglichkeit mit einem entsprechenden Textfeld 53 sowie einer Schaltfläche 54 dargestellt. Hierdurch kann z.B. eine Sprachausgabe bei der Navigation aktiviert bzw. deaktiviert werden. Das Textfeld 53 weist auf die entsprechende Funktion hin, also z.B. die Sprachausgabe. In der Schaltfläche 54 kann entsprechend ein Haken durch ein Anwählen der Schaltfläche 54 gesetzt oder gelöscht werden.

Mit einem Verkleinern bzw. einem Vergrößern der Unterauswahlfenster 333, 334 vergrößert bzw. verkleinert sich jeweils auch das Auswahlfenster 330. Der Fahrer kann eines, keines oder auch beide Unterauswahlfenster 333, 334 jeweils vergrößern. Die Unterauswahlfenster 333, 334 sind in gleicher Form wie die Auswahlfenster selbst aufgebaut, liegen jedoch vollständig innerhalb der Fläche des Auswahlfenster 330. Sie stellen weitere Unterfunktionen zu Unterfunktionen der Hauptfunktion Navigation dar.

In dem ersten Unterauswahlfenster 333 ist die Zieleingabe für das in dem Textfeld 44 angegebene Fahrziel dargestellt. Eine Darstellung des Fahrziels kann in einem Textfeld 335 nochmals wiederholt werden. Eine Funktionsangabe der Unterfunktion des Unterauswahlfensters ist mit der Bezeichnung 336 "Ziel" angegeben. Mit der Bezeichnung 337 "Stadt" kann durch eine entsprechende Buchstabenauswahl eine Stadt als Fahrziel eingegeben werden. Hinter der Bezeichnung 338 "Straße" kann durch eine entsprechende Buchstabenauswahl die Straße eingegeben werden. Eine Option für die Routenberechnung kann über die Funktion "Weg" 339 aus einer Listendarstellung 340 ausgewählt werden. Hierzu kann z.B. zwischen dem schnellsten Weg, dem kürzesten Weg oder einem Weg ohne Fähren oder Mautstraßen ausgewählt werden.

In dem zweiten Unterauswahlfenster 334 ist keine Auswahl einer Unterfunktion, sondern lediglich eine Informationsdarstellung angegeben. Über die Auswahl des zweiten Auswahlfensters kann sich der Fahrer über die Restfahrzeit zu dem Fahrziel 341 und über die restliche Fahrstrecke 342 zu dem Fahrziel informieren.

Im Unterschied zu der Figur 3 ist in der Figur 4 die Aktivierungsmarke 37 deaktiviert und die Aktivierungsmarke 41 aktiviert. Entsprechend wurden die Bezugszeichen auf 37' und 41' geändert. So erfolgt entsprechend der vorgenommenen Aktivierung eine Musikwiedergabe von der CD und keine Ausgabe eines Radioprogramms.

In einer ersten Ausführungsform sind in der ersten Anzeigefläche 30 und wenigstens einem Auswahlmenü stets alle möglichen Hauptfunktionen einer Fahrerinformationsvorrichtung dargestellt. In einer weiteren Ausführungsform ist es aber auch für den Benutzer möglich, bestimmte Hauptfunktionen, wie z.B. Radio, CD, Navigation oder Telefon zu deaktivieren, so dass nur eine Auswahl der möglichen einstellbaren Hauptfunktionen in der Anzeigefläche 30 erscheint. Weiterhin ist es aber auch möglich, dass Hauptfunktionen automatisch dann dargestellt werden, wenn eine entsprechende Funktionsgruppe an die Fahrerinformationsvorrichtung angeschlossen wird. So ist es z.B. möglich, eine Telefonfunktion als ein Auswahlfenster nur dann darzustellen, wenn von der Zentraleinheit 2 eine Verbindung zu einem Mobiltelefon des Benutzers beispielsweise über eine Kabel- oder eine Bluetooth-Verbindung besteht.

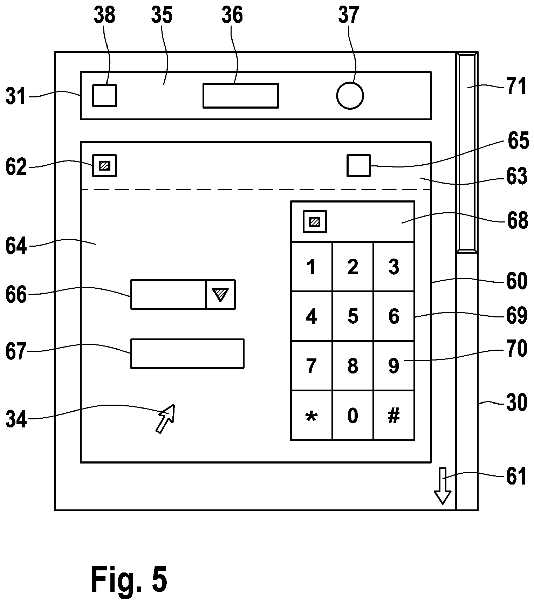

In der Figur 5 ist die Telefonfunktionalität in der Anzeigefläche 30 in einem erweiterten Auswahlfeld 60 dargestellt. Die Telefonfunktionalität schließt sich hier an die Radiofunktionalität an. Das Auswahlfeld 60 ist dabei so groß, dass neben dem ersten Auswahlfenster 31 keine weiteren Auswahlfelder mehr gleichzeitig in der Anzeigefläche 30 dargestellt werden können. Durch eine Pfeildarstellung 61 wird dabei angedeutet, dass sich an das Telefonauswahlfeld 60 noch weitere Auswahlfelder anschließen. Ein Benutzer hat nun wenigstens zwei Möglichkeiten, um zu diesen weiteren Auswahlfeldern zu gelangen. Zunächst kann er die Vergrößerungsmarke 62 des Telefonauswahlfeldes anwählen und damit das Telefonauswahlfeld verkleinern. Durch die Verkleinerung des Telefonauswahlfeldes 60 können nun auch übrige Auswahlfelder wieder in der Anzeigefläche 30 dargestellt werden. Ferner ist es auch möglich, dass eine Scrollfunktionalität vorgesehen ist, mit der ein Benutzer mittels eines Bildwechsels zu weiteren Auswahlfeldern wechseln kann. Die Scrollfunktion kann z.B. durch einen Scrollbalken 71 an einer rechten Seite der Anzeigefläche 30 durch den Benutzer gesteuert werden.

Das Telefonauswahlfeld 60 weist einen ersten Bereich 63 und einen zweiten Bereich 64 auf, wobei bei einer Verkleinerung der erste Bereich unverändert bliebe. In dem ersten Bereich 63 ist eine Funktion "Telefon" angegeben. Ferner ist eine Verbindungsmarkierung 65 vorgesehen, die anzeigt, ob derzeit eine Telefonverbindung besteht. Aus einer Auswahlliste 66 kann ein Benutzer einen Teilnehmer auswählen. In einem Textfeld 67 kann eine Nummer durch einen Benutzer eingeschrieben werden. Der Benutzer kann hierzu ein weiteres Auswahlfeld 68 aufrufen, bei dem eine Tastatur 69 erscheint. Einzelne Tasten 70 bilden dabei ein in dem Auswahlfeld 68 vorgesehenes Tastenfeld. Ein Benutzer kann einzelne Tasten 70 beispielsweise mit der Anzeigemarke 34 erst anwählen und dann durch eine Bestätigung auswählen. Die gewählte Nummer erscheint dann in dem Textfeld 67. Durch eine Anwahl der Verbindungsmarkierung 65 kann der Benutzer die Telefonverbindung herstellen lassen.

Neben den bereits erläuterten Funktionalitäten können weitere Funktionen einer Fahrerinformationseinrichtung in der Anzeigefläche zur Information ausgegeben bzw. durch entsprechende Benutzereinstellungen auch gesteuert werden. Dies können z.B. folgende Funktionen sein:

| | |
|---|---|
| Funktion: | Kassettenwiedergabe |
| Unterfunktion: | - Rauschunterdrückung an/aus |
| | - Wiedergabe einer gewünschten Seite |
| | |
| Funktion: | Klangwiedergabe |
| Unterfunktion: | - Auswahl eines Klangspektrums |
| | - Balanceeinstellung |
| | |
| Funktion: | Klimaeinstellung |
| Unterfunktion: | gewünschte Temperatur |
| | Luftströmung (Fenster/Fußraum/Luftdüsen) |
| | - Umluft |
| | - Lüftungsstärke |
| | |
| Funktion: | Personalisierung |
| Unterfunktion: | - Telefonnummernverzeichnis |
| | - Sitzeinstellung |
| | |
| Funktion: | Fenster- und Schiebedach |
| Unterfunktion: | Öffnen einzelner Fenster und des Schiebedachs |
| | |
| Funktion: | CD-Wechsler |
| Unterfunktion: | - CD-Auswahl |
| | - Wiederholungs-Zufallswiedergabeeinstellung |

Die gezeigten Beispiele einer Menüstruktur, einer Auswahl von Optionen durch beispielsweise Liste, Haken oder Auswahlfeld, lassen sich sowohl auf die Steuerung weiterer Funktionen einer Fahrerinformationsvorrichtung, aber auch übertragen auf beliebige andere Funktionen zur Steuerung anderer elektronischer Geräte entsprechend verwenden.

## Patentansprüche

1. Fahrerinformationsvorrichtung (1) mit einer Radio-, einer CD- und einer Navigationsfunktionalität, mit einer Bedienvorrichtung mit einer Anzeige (6, 30), wobei die Anzeige (6, 30) berührungsempfindlich ausgebildet ist, wobei in der Anzeige zu der Radio-, der CD- und der Navigationsfunktionalität jeweils ein Auswahlfenster darstellbar ist und wobei die jeweilige Funktion in dem Auswahlfenster angegeben ist, wobei eine Auswahlfunktion (38, 42, 46) zu einer Erweiterung wenigstens eines der Auswahlfenster (31, 32, 33) derart vorgesehen ist, dass eine Anzeigefläche des Auswahlfensters vergrößert wird, wobei das Auswahlfenster um wenigstens eine Darstellung einer auswählbaren Unterfunktion der jeweiligen Funktion erweitert wird, und wobei in dem jeweiligen Auswahlfenster ohne eine Vergrößerung des Auswahlfensters jeweils eine Aktivierungsmarke (37, 41, 45) dargestellt ist, die eine Aktivierung der jeweiligen Funktionalität anzeigt und durch deren Auswählen die jeweilige Funktionalität aktiviert wird.

2. Bedienvorrichtung nach Anspruch 1, **dadurch gekennzeichnet, dass** bei der Erweiterung des Auswahlfensters eine Position des oberen Randes des Auswahlfensters in der Anzeigefläche unverändert bleibt.

3. Bedienvorrichtung nach Anspruch 2, **dadurch gekennzeichnet, dass** ein nachfolgendes Auswahlfenster in der Anzeigefläche nach der Vergrößerung des Auswahlfensters nach unten verschoben ist.

4. Bedienvorrichtung nach einem der vorhergehenden Ansprüche, **gekennzeichnet durch** wenigstens eine, mit der Erweiterung des Auswahlfensters eingeblendete Rollbalkenauswahl, Tastenfeldeingabe und/oder Schaltfläche zur Steuerung der Unterfunktion.

5. Bedienvorrichtung nach einem der vorhergehenden Ansprüche, **gekennzeichnet durch** eine in dem jeweiligen Auswahlfenster dargestellte Schaltfläche (38, 42, 46, 62) zur Erweiterung des Auswahlfensters.

6. Bedienvorrichtung nach einem der vorhergehenden Ansprüche, **dadurch gekennzeichnet, dass** wenigstens ein bereits erweitertes Auswahlfenster (330) wenigstens ein weiteres, entsprechend erweiterbares Unterauswahlfenster (333, 334) enthält.

## Claims

1. Driver information apparatus (1) with a radio functionality, a CD functionality and a navigation functionality, having an operator control apparatus with a display (6, 30), wherein the display (6, 30) is of touch-sensitive design, wherein a respective selection window is presentable in the display for the radio functionality, the CD functionality and the navigation functionality and wherein the respective function is indicated in the selection window, wherein a selection function (38, 42, 46) for expanding at least one of the selection windows (31, 32, 33) is provided such that a display area of the selection window is enlarged, wherein the selection window is expanded by at least one presentation of a selectable subfunction of the respective function, and wherein a respective activation marker (37, 41, 45) is presented in the respective selection window without enlargement of the selection window, said activation marker indicating activation of the respective functionality and, when selected, activating the respective functionality.

2. Operator control apparatus according to Claim 1, **characterized in that** the expansion of the selection window results in a position of the upper edge of the selection window in the display area remaining unchanged.

3. Operator control apparatus according to Claim 2, **characterized in that** a subsequent selection window is moved downwards in the display area after the enlargement of the selection window.

4. Operator control apparatus according to one of the preceding claims,
**characterized by** at least one scroll bar selection, keypad input and/or button, shown when the selection window is expanded, for controlling the subfunction.

5. Operator control apparatus according to one of the preceding claims,
**characterized by** a button (38, 42, 46, 62) presented in the respective selection window for expanding the selection window.

6. Operator control apparatus according to one of the preceding claims,
**characterized in that** at least one already expanded selection window (330) contains at least one further, accordingly expandable subselection window (333, 334).

## Revendications

1. Dispositif d'information au conducteur (1) comportant une fonctionnalité radio, .CD et navigation, un dispositif de commande comportant un écran (6, 30), l'écran (6, 30) étant réalisé de manière à être sensible au toucher, une fenêtre de sélection pouvant être respectivement représentée dans l'écran pour la fonctionnalité radio, CD et navigation et la fonction respective étant indiquée dans la fenêtre de sélection, une fonction de sélection (38, 42, 46) pour une extension d'au moins une des fenêtres de sélection (31, 32, 33) étant prévue de manière à ce qu'une surface d'affichage de la fenêtre de sélection soit agrandie, la fenêtre de sélection étant agrandie à raison d'au moins une représentation d'une sous-fonction sélectionnable de la fonction respective, et étant représentée dans la fenêtre de sélection respective, sans agrandissement de la fenêtre de sélection, respectivement une marque d'activation (37, 41, 45) qui affiche une activation de la fonctionnalité respective et la fonctionnalité respective étant activée par sa sélection.

2. Dispositif de commande selon la revendication 1, **caractérisé en ce que**, en cas d'extension de la fenêtre de sélection, une position du bord supérieur de la fenêtre de sélection dans la surface d'affichage reste inchangée.

3. Dispositif de commande selon la revendication 2, **caractérisé en ce qu'**une fenêtre de sélection suivante dans la surface d'affichage est décalée vers le bas après l'agrandissement de la fenêtre de sélection.

4. Dispositif de commande selon une des revendications précédentes, **caractérisé par** au moins une sélection de barre de défilement, une saisie sur champs de touche et/ou une surface d'activation affichée lors de l'extension de la fenêtre de sélection pour commander la sous-fonction.

5. Dispositif de commande selon une des revendications précédentes, **caractérisé par** une surface d'activation (38, 42, 46, 62) représentée dans la fenêtre de sélection respective pour l'extension de la fenêtre de sélection.

6. Dispositif de commande selon une des revendications précédentes, **caractérisé en ce qu'**au moins une fenêtre de sélection déjà étendue (330) contient au moins une autre sous-fenêtre de sélection pouvant être agrandie en conséquence (333, 334).
